Europäisches Patentamt

European Patent Office

Office européen des brevets

(11) Publication number: **0 040 828**
A1

# EUROPEAN PATENT APPLICATION

(21) Application number: 81103925.4

(22) Date of filing: 21.05.81

(51) Int. Cl.³: **A 01 G 25/09**, A 01 D 45/00

(30) Priority: 23.05.80 MX 182470
03.09.80 US 183846

(43) Date of publication of application: 02.12.81
Bulletin 81/48

(84) Designated Contracting States: **AT BE CH DE FR GB IT LI LU NL SE**

(71) Applicant: **PICK-PRO INTERNATIONAL INDUSTRIES, LTD.,** Post Office Box 613, Georgetown Grand Cayman (KY)

(72) Inventor: **Crisantes, Demetrio, Dr. Romero No. 99 Ote., Culiacan Sinaloa (MX)**
Inventor: **Crisantes, Theojary, Dr. Romero No. 99 Ote., Culiacan Sinaloa (MX)**

(74) Representative: **Fleuchaus, Leo, Dipl.-Ing. et al, Fleuchaus & Wehser Melchiorstrasse 42, D-8000 München 71 (DE)**

(54) Mechanism for irrigation, maintenance and harvesting of farm crops.

(57) A mechanism for accomplishing a variety of material handling operations incident to the planting, growth, maintenance and harvesting of farm crops. A movable machine is adapted to traverse a farm land parcel in either rotary manner where it revolves about a center pivot or in lateral manner where it is adapted to move laterally in linear manner across the land parcel. The mechanism is adapted to convey irrigation water and other liquid materials and to distribute such materials on the land area. The mechanism is further adapted to convey solid materials to the land parcel incident to planting, fertilizing the crops etc. and is capable of conveying produce from the land parcel during harvesting.

0040828

## MECHANISM FOR IRRIGATION, MAINTENANCE AND HARVESTING OF FARM CROPS

### FIELD OF THE INVENTION

This invention relates generally to farming operations for farm crops and similar environments requiring irrigation operations and more particularly is directed to irrigation and conveying systems that function cooperatively and accomplish conveying operations to assist in the planting, growth, maintenance and harvesting of the crops from the land area.

### BACKGROUND OF THE INVENTION

In view of the increasing need for farm products, farming operations are becoming of much larger nature at the present time as compared to smaller farming operations of the past. Farming operations are also becoming more mechanized in order to reduce the overall labor cost of the farming operation and yield farm products and effectively meet the competitive requirements required for present day farming operations. The increasing need for farm products has also created the need for additional farming operations in environments where it is necessary to mechanically irrigate the land area during particular portions of the growing season when the amount of rainfall is less than desirable.

Aside from irrigation operations necessary for growth of farm crops, it is at times necessary to provide other servicing operations on the land parcel involved and these servicing operations for the most part are accomplished by separate farm equipment or by manual labor and logically result in additional expense to the farming operations that adversely affects the commercial feasibility thereof. For example, it is necessary to accomplish planting operations and to do so, especially where extremely large land parcels are involved, quantities of seeds or plants being individually planted must be distributed to desired locations on the land parcel and then must be further distributed over the surface of the land parcel itself in the planting operation. Transportation of seeds and plants to particular sites about the land parcel typically requires special equipment and labor that add costs to the farming operations and thus result in increased cost of the produce harvested.

At certain portions of the crop growing operations it may be necessary to distribute fertilizer over the land area to enhance growth of the crops and to apply fumigants to the plants being grown in order to prevent contamination or deterioration of the produce by insects, disease etc. Distribution of fertilizer and fumigants to crops being grown also typically requires additional special equipment and further enhances the cost of the produce that will be harvested.

Harvesting operations for crops are typically quite heavy in their requirement for manual labor. In order to minimize the labor requirement and to accomplish fast and efficient harvesting, special produce collection conveyors are provided that traverse the land parcel along with harvesting crews. The freshly harvested produce is transported by the produce collection conveyer to a packaging facility where it is packaged and loaded onto trucks or other transportation devices that transport the produce to the market.

It is desirable to provide a crop servicing mechanism that has the capability of conveying irrigation water and distributing the water over the land area in order to enhance growth of the crops and which also functions to convey other liquid and solid materials to and from the land area during growth, servicing and harvesting operations.

In accordance with the basic concept of the present invention it is desirable to reduce labor costs and increase production in crops such as, but not limited to, vegetables, fruits, sugar cane, etc. Irrigation, fumigation and harvesting operations are well known to be extremely labor intensive in farming operations. It is within the concept of this invention to incorporate all three of these basic functions into a single crop servicing mechanism and thereby effectively reduce the need for specialized equipment to provide such functions individually. A center pivot type apparatus or apparatus adapted to move laterally over the land parcel is combined with a conveyor system and high pressure chemical application system in order to accomplish the desired functions.

Irrigation of land parcels is typically accomplished through any means applicable to center pivot or lateral move type irrigation equipment. For example, the drip or flow method of irrigation is seldom utilized for the reason that difficult hardware designs are necessary to accomplish water application. The present invention is effectively adaptable to the drip or flow method and also to the more common sprinkler for spraying method whereby water, pumped through a water distribution conduit, is distributed to the land area in the form of a sprinkler or spray from a plurality of nozzles that are positioned in spaced relation along the water distribution conduit.

In view of the foregoing, it is an important feature of the present invention to provide a novel mechanism for accomplishing material handling operations incident to farming operations thereby eliminating the necessity for providing separate farm machinery in order to accomplish planting, growth, servicing and harvesting of produce from the land area.

It is a further feature of the present invention to provide a novel mechanism for accomplishing a variety of material handling operations wherein a mechanism utilized primarily for irrigation of the land area is also capable of conveying other liquid and solid materials both to and from the land area as is necessary for conducting special farming operations such as fertilizing, fumigating, planting and harvesting of the produce.

It is also a feature of this invention to provide a novel mechanism for material handling operation incident to crop production wherein typically high labor intensive farming operations are minimized from the labor standpoint thereby effectvely reducing the overall cost of the farming operation.

It is an even further feature of the present invention to provide a novel mechanism for accomplishing multiple material handling operations to promote efficient low-cost farming of crops in which the mechanism is of simple nature, is reliable in use and low in cost.

Other and further objects, advantages and features of this invention will become obvious to one skilled in the art upon an understanding of the illustrative embodiments about to be described and various advantages, not referred to herein, will occur to one skilled in the art upon employment of this invention in practice.

## SUMMARY OF THE INVENTION

In accordance with the present invention farm crop servicing operations such as planting, irrigation, fertilizing, fumigation and harvesting are effectively provided by a single combination farm implement that is adapted to traverse the land parcel being farmed. The present invention is effectively adaptable to center pivot type crop servicing machines that revolve about a center pivot that ordinarily is in the form of a water supply terminal. The present invention is also effectively adaptable to lateral move type crop servicing machines that are capable of traveling in linear manner over the land parcel in order to accomplish servicing operations on a generally rectangular land parcel. The crop servicing equipment of the present invention is capable of conducting irrigation operations as required and is also capable of conveying other liquid materials such as liquid fertilizers, fumigants etc. and to accomplish effective distributions of such materials to the crops being farmed. In the case of fumigant distribution, the crop servicing machine may incorporate liquid or solid fumigant distributing apparatus that may extend into the rows between row crops and distributive fumigant materials transversely onto the crops so that the crops are provided with adequate protection against deterioration by insects, plant diseases etc. For liquid fumigant materials, a fumigation mainline conduit is provided that is separate from the irrigation water distributing conduit and which is provided as necessary to provide fungicides, insecticides and other high-cost chemicals for the crops being grown. These chemicals are typically applied in small quantities and

at high pressures, making application through the irrigation pipeline economically unfeasible. The fumigation mainline conduit may be supported by a conveyor system of the machine and is provided with outlets that are spaced as required by spacing of the row crops. Because of the high pressures and low quantities required, it is desirable to provide a separate supply and pump for application of fumigants to the crops. This supply and pump is provided on a truck or other service vehicle which, in the case of a lateral move type mechanism, travels with the machine as it moves along the land parcel being serviced. For the distribution of liquid fertilizers, the fumigation mainline may be employed also for distributing concentrated liquid fertilizer materials or, in the alternative, liquid fertilizers may be mixed with irrigation water at the water pumping equipment of the machine and distributed along with the irrigation water to the land area.

To accomplish servicing operations where solid materials such as solid fertilizer, seeds, small plants, etc. are transported to the land area, the crop servicing mechanism incorporates a conveyor system that is capable of transporting such materials to particular locations on the parcel of land being farmed. Seeds, fertilizer and other solid particulate may be distributed from the conveyor system by suitable particulate broadcasting equipment provided thereon. In the alternative, the solid particulate may be handled by farm workers or by any other suitable automatic equipment that might function in conjunction with the conveyor apparatus. For example, a tractor or other vehicle having the capability for broadcast distribution of seeds, fertilizer, etc. may be provided with a receptacle that will contain a particular quantity of the material being broadcast. The lateral
conveyor mechanism may be employed to transport the
material from a truck or other road type transport
vehicle rather than requiring manual labor or other
vehicles to accomplish such transportation and rather
than requiring the particulate distributing apparatus
to periodically leave the land area in order to pick
up quantities of the material being distributed.

In conjunction with harvesting operations
or for removal of any materials from the land area
being farmed, the conveyor systems of the crop
servicing apparatus may be effectively utilized. The
conveyor may be loaded by farm workers harvesting the
produce or by automatic crop harvesting equipment and
the produce loaded on·to the conveyor will be transported
to a vehicle or other produce receiving apparatus
that is capable of traveling on a road located at
one side of the land area involved.

By incorporating a conveyor system and a
fumigant distribution system in conjunction with
land irrigation apparatus, the result is the provision
of apparatus that may be utilized in a wide variety
of farming operations and will not remain idle for
long periods of time. Further, by combining features
ordinarily provided in special farming equipment in
conjunction with irrigation apparatus, the result
is an effective crop servicing machine having a
wide variety of uses and which effectively spreads
the overall costs thereof over the entire farming
operation. The result is production of crops at
lower cost and the ability to conduct effective
farming operations with minimal dependency on manual
labor.

The crop servicing machine of this invention
conveniently takes the form of a plurality of elongated truss spans each being supported by mobile tower means that adapts the mechanism to traverse the land area being farmed. Each of the truss spans incorporates a section of irrigation conduit provided with appropriate sprinklers or nozzles so as to facilitate irrigation of the land area in the conventional sense. Each of the irrigation spans further incorporates a conveyor section that is capable of cooperating with the conveyors of adjacent truss spans so that produce or other materials being conveyed from the land area will travel from conveyor section to conveyor section and ultimately to a produce receiving facility that travels along with the delivery and receiving portion at one end of the crop servicing mechanism. Mechanized conveyor loading equipment is also provided which will transport manually or automatically harvested crops to respective ones of the conveyor sections.

For the purpose of conducting fumigation and liquid fertilizing operations, a fumigation mainline section is provided on each of the crop servicing truss spans with each of the fumigation mainline sections being interconnected by a flexible coupling. Fumigant distributing apparatus is interconnected to each of the fumigation mainline sections and is positioned so as to extend between rows of crops and spray fumigant materials in transverse manner onto the row crops for protection thereof.

BRIEF DESCRIPTION OF THE DRAWINGS

In order that the manner which the above recited advantages and features of the invention are attained and can be understood in detail, more particular description of the invention briefly summarized above, may be had by reference to the specific embodiments thereof that are illustrated in the appended drawings, which drawings form a part of this specification. It is to be understood, however, that the appended drawings illustrate only typical embodiments of the invention and therefore are not to be considered limiting of its scope, for the invention may admit to other equally effective embodiments.

In the Drawings:

FIG. 1 is a plan view of a farm crop servicing mechanism constructed in accordance with the present invention, showing the mechanism in the form of lateral move apparatus and further showing two complete truss spans together with a portion of a third truss span and further showing a delivery and receiving vehicle that travels along with the crop servicing mechanism to provide materials therefor and receive materials therefrom.

FIG. 2 is an elevational view of a single truss span constructed in accordance with Figure 1 and illustrating portions of adjacent truss spans and the relationship therebetween.

FIG. 3 is a transverse sectional view taken along line 3-3 of Figure 2 and illustrating the water distribution, material conveyor and fumigant distribution systems thereof in detail.

FIG. 4 is an enlarged, fragmentary elevational view of the apparatus of Figures 1 and 2 and illustrating apparatus provided thereon for conducting specific irrigation, fumigation and harvesting operations for the crops being grown on the land area involved.

FIG. 5 is a fragmentary elevational view of the apparatus of Figure 4, illustrating a conveyor loading mechanism that is capable of transporting harvested produce and other materials upwardly and
depositing such materials onto the conveyor system
for conveyor transportation from the land area.

FIG. 6 is a sectional view taken along line
6-6 of Figure 5 and illustrating the conveyer
loading mechanism in the raised position thereof
and depositing produce or other materials onto the
conveyor.

FIG. 7 is a transverse sectional view similar
to Figure 6 and showing the conveyor loading mechanism
with the receptacle thereof in the lowered position
thereof.

FIG. 8 is a partial elevational view illustrating
the initial extremity of the crop servicing mechanism
of Figures 1 and 2, illustrating the relationship of the
mechanism to a water supply canal and to a servicing
vehicle capable of transporting materials to and from
the conveyor system of the mechanism.

FIG. 9 is also a partial elevational view
similar to the view shown in Figure 8 and illustrating
interconnection of a fumigant or concentrated fertilizer
supply vehicle to the fumigation mainline system
of the apparatus by means of a motor and pump assembly
and a flexible supply conduit.

DESCRIPTION OF PREFERRED EMBODIMENTS

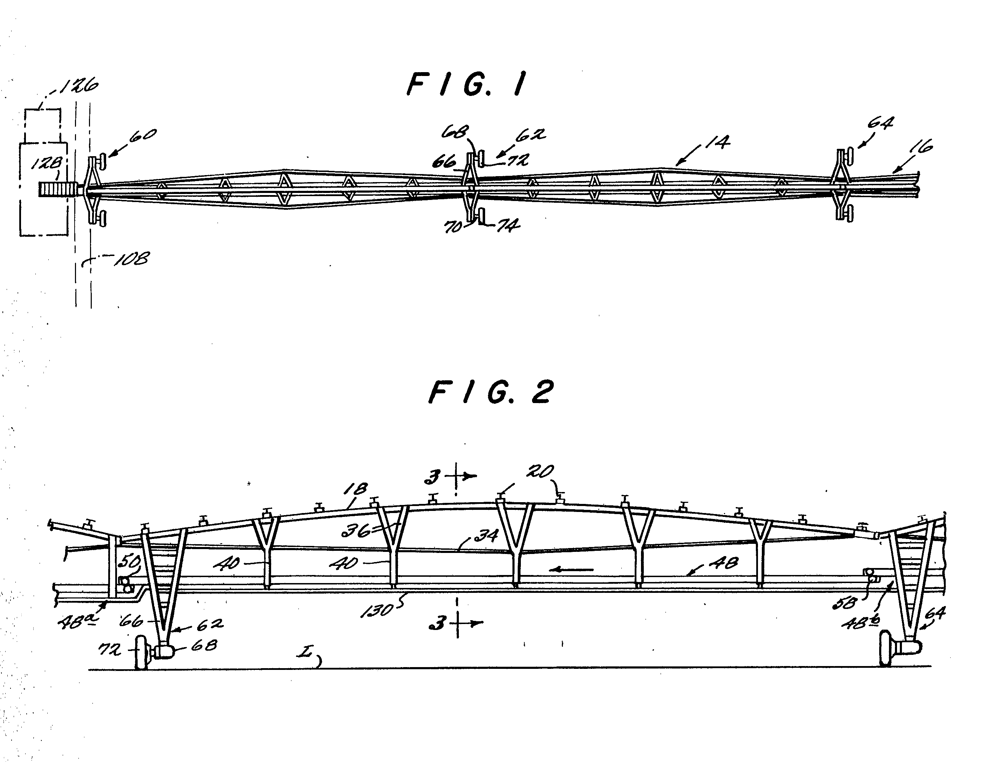

Referring now to the drawings and first to
Figure 1, in accordance with the concept of this
invention there is provided a crop servicing mechanism
having the capability of accomplishing a wide variety
of material handling operations that are incident to
farming operations and minimizing the labor requirements that are ordinarily necessary for such farming
operations. In accordance with this invention, the
crop servicing mechanism takes the form generally
shown at 10 wherein a plurality of elongated truss spans are shown generally at 12, 14 and 16. Each of the truss spans may be in the order of 120 feet in length and incorporate a water distribution conduit 18 as an integral load supporting member thereof.

Depending upon the particular nature of irrigation operations involved, the water supply conduit 18 may be provided with a plurality of sprinkler heads 20 that are located in spaced relation along the entire length of the water distribution conduit. As irrigation water is caused to flow through the irrigation conduit 18 under pressure, the water emerges from the irrigation heads and is sprinkled or sprayed onto the land area. Distribution of water onto the land area however is not limited to the sprinkling or spraying method illustrated in conjunction with Figure 2. As shown in Figure 4 the drip or flow method of irrigation may be accomplished in the manner shown. A drop conduit 22 may be interconnected with the water distribution conduit 18 and the flow of irrigation water therefrom may be controlled by means of an adjustable flow controlling valve 24. A flexible conduit section 26 may extend from the valve 24 with a terminal outlet portion 28 thereof positioned so as to deposit irrigation water directly into channels 30 defined between the rows of crops.

Referring now again to Figures 1 and 2 each of the truss spans further incorporates a pair of elongated tension elements 32 and 34 having the extremities thereof secured at respective extremities of the water distribution conduit 18 and functioning to maintain the water distribution conduit in an upwardly bowed or arcuate condition. Pairs of intermediate structural braces, also known as V-jacks 36 are interposed between the water distribution conduit and the tension elements and maintain the bowed configuration of the tension elements. The particular truss span configuration described above is not to be considered as limiting in regard to the present invention. The invention will function quite adequately in conjunction with truss spans of other design configurations as well.

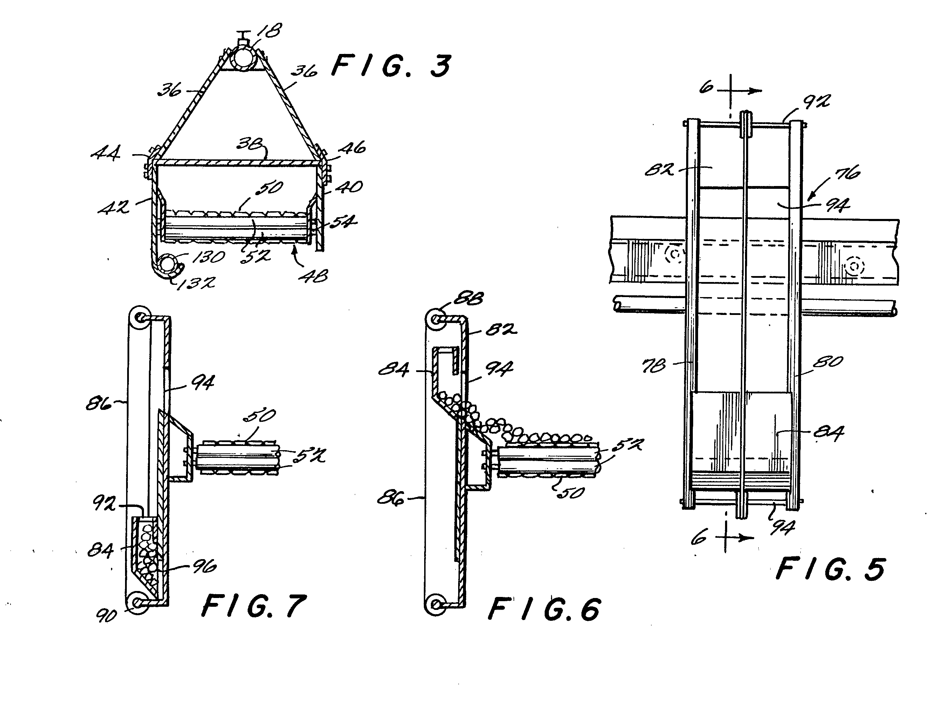

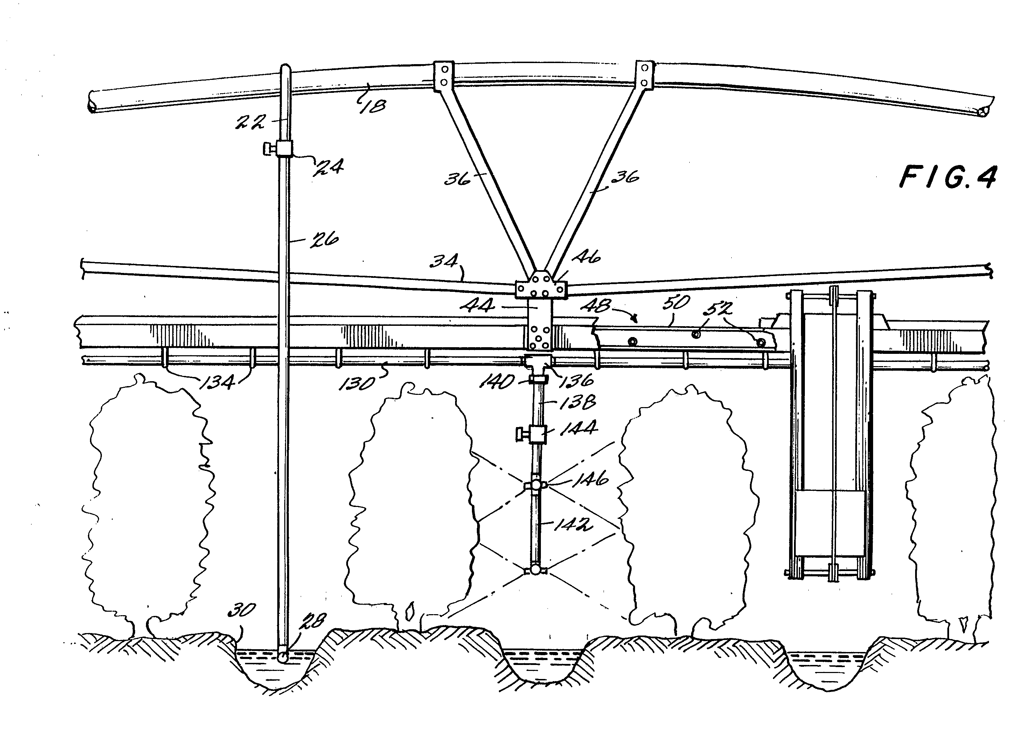

The spaced pairs of structural braces and other transverse braces of the truss spans including a transverse brace element 38 shown best in Figure 3, provide support for a plurality of depending conveyor support elements 40 and 42 that are secured by means of structural connector elements 44 and 46 to the respective V-jack structures. The conveyor support elements 42 and 44 provide support for a conveyor mechanism illustrated generally at 48 and which includes a conveyor belt structure 50 adapted to be supported by a plurality of conveyor rolls 52 having the axles 54 thereof supported by suitable axle support means provided on the conveyor support elements 40 and 42. As shown at 48, 48a and 48b each of the truss spans of the apparatus will be provided with an individual conveyor section and the various conveyor sections will function in coordinated manner so as to convey produce or other materials from the land parcel. Each of the conveyor sections will be independently driven such as by powered drive roller means 56 and 58 which may be powered electrically, hydraulically, or by any othere suitable means in order to achieve conveyor movement. The extremities of the conveyors are oriented in overlapping relationship in order that produce or other material being transported from the land area L will be conveyed from conveyor section to conveyor section until the produce or material reaches the terminal extremity of the crop servicing mechanism, whereupon the produce or other material may be then handled in any other suitable manner as is convenient to the intended operation involved.

Each of the irrigation spans 12, 14 and 16 are supported by means of mobile tower mechanisms such as identified generally at 60, 62 and 64 in Figure 1. Each of the mobile tower assemblies includes a generally triangular framework structure shown at 66 having a pair of drive motors 68 and 70 positioned at the lower extremity of the framework and providing motive power for controlled rotation of a pair of drive wheels 72 and 74. The respective drive wheels and motor drive mechanism therefor are of reversible nature and may be oriented in any suitable manner in relation to the truss spans apparatus, depending upon the particular design of the system involved. For example, in Figures 1 and 2 the drive motors and drive wheels are illustrated in reverse oriented manner. It should also be borne in mind that the respective truss spans may be oriented in any suitable manner so as to locate the respective conveyors in condition to convey materials either to or from the land area being serviced.

It is desirable that the lower portion of the truss span be positioned well above the highest elevation of any crops that will be grown on the land area being serviced. For example, if the crops take the form of sugar cane or corn or perhaps low profile trees such as fruit trees, for example, the height of the crops may be in the order of 10 to 15 feet. Accordingly, the crop servicing mechanism of this invention should have an elevation sufficient to insure adequate clearance with the crops so that no crop damage will occur as the apparatus traverses the land area. Since the conveyor apparatus, even where low crops are concerned, may be well above the reach of workmen conducting servicing operations such as harvesting, it is desirable to provide means for elevating harvested crops and other materials from the field to the conveyor. In accordance with the present invention a produce elevating mechanism may conveniently take the form illustrated in Figures 5, 6 and 7 and identified generally at 76. The elevator 76 is shown to be defined a pair of side frame elements 78 and 80 cooperating with a rear wall structure 82 to define an elevator framework. An elevatable produce container 84 is movable upwardly and downwardly within the elevator framework and may be manipulated by means of a control cable 86 extending about pulleys 88 and 90 that are supported by axle members 92 and 94 that are in turn supported by the side members 78 and 80. As shown in Figure 7, the elevatable container 84 is positioned at the lower portion of elevator structure and produce harvested from the crops may simply be deposited through the upper opening 92 of the container as shown. After the container has been suitably filled with produce the control cable 86, which is connected to the upper and lower portions of the container as shown, is raised until the lower opening 96 of the container becomes registered with the opening 94 that is defined in the rear wall structure 82 of the elevator and the produce will then descend from the container onto the conveyor for transportation from the field or land area being serviced.

The produce elevator structure is shown in Figure 4 in position between rows of crops. Workmen harvesting produce from the crops will simply place the crops on the produce elevator and operate the elevator in such manner as to elevate the crops to the conveyor belt in the manner described above.

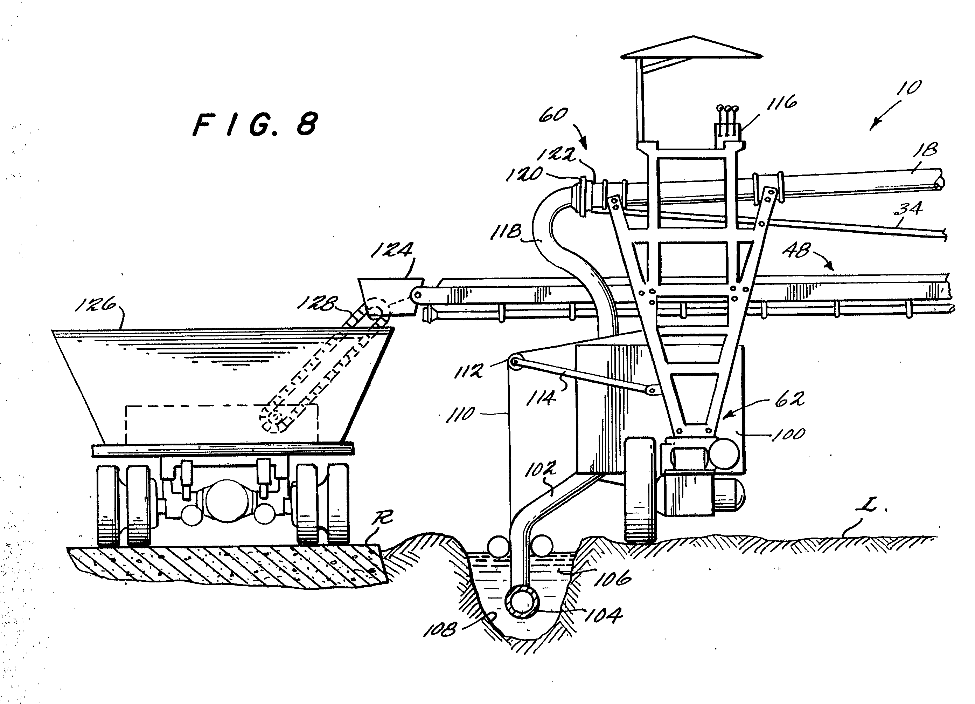

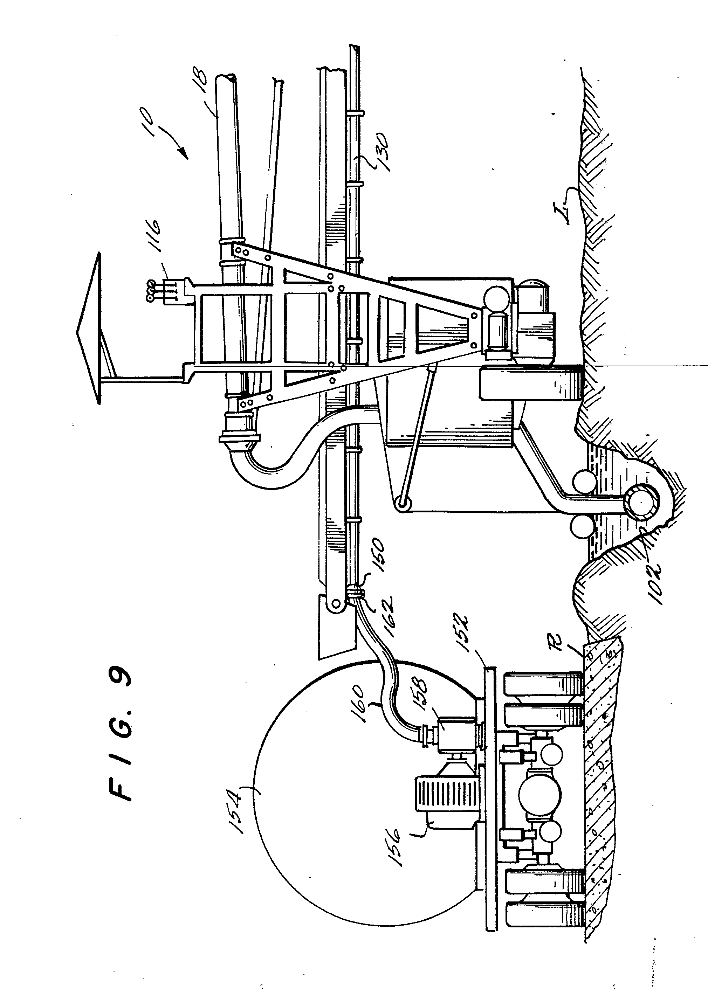

As shown in Figures 8 and 9, the mobile tower 60 that supports the initial extremity of the crop servicing mechanism will typically include suitable operation and control systems for controlling the crop servicing apparatus. For example, an engine and pump assemble 100 may be secured to the triangular framework 62 of the mobile power 60 and a suction hose 102 will extend from the engine onto pump assembly and terminate in the form of a suction intake screen or inlet opening 104 that allows water to enter the conduit 102 free of any debris that might be present in the water 106 contained within the canal 108. The position of the suction hose 102 is controlled within the canal 108 by means of a support cable 110 that extends over an idler pulley 112 that is pivotively supported on the framework 62 by means of a pivoted support arm 114. A manual or power operated winch to which the cable 110 is secured allows the position of the suction hose 102 to be adjusted by an operator who is in charge of a control console 116. A discharge conduit 118 extends from the engine and pump assembly 100 and is provided with a connector element 120 that adapts the discharge hose for connection to a coupling element 122 defining one extremity of the irrigation water distributing conduit 18.

As further shown in Figures 8 and 9 the conveyor mechanism incorporates a terminal guide portion 124 that is adapted to guide produce flowing from the terminal end portion of the conveyor. Produce receiving means such as a truck 126 is provided with an internal conveyor 128 that is capable of transferring produce from the conveyor downwardly into the bed portion of the truck or other vehicle in such manner that the produce will not be bruised during such handling.

It is also desirable to provide means for accomplishing fumigation of the crops to prevent deterioration thereof by insects and disease and also to provide an alternative means for accomplishing distribution of fertilizer to the crops being grown. In accordance with the present invention such may conveniently take the form shown in Figures 2, 3, 4, 8 and 9. As shown in Figure 2 there is provided a fumigation mainline conduit 130 which is in the form of conduit sections that extend the length of the particular truss span involved. As shown in Figure 3, the conveyor support elements 42 are formed with curved lower extremities 132 that define spaced supports for the fumigation mainline conduit 130. Obviously, the conduit 130 may be supported by any other suitable hanger mechanism that is structurally interconnected with the truss spans structure or conveyor mechanism without departing from the spirit or scope of the present invention. Further, as shown particularly in Figures 4, 8 and 9, a plurality of U-shaped hanger members 134 may be employed to support the fumigation mainline conduit 130 from the lower portion of the conveyor mechanism 48. Hanger elements 134 may simply take the form of U-bolts that may be inserted through apertures formed in the structural elements of the conveyor mechanism and may be assembled therewith by means of suitable locknut and washer assemblies.

Along the length of the fumigation mainline conduit 130 are provided a plurality of "T" connector elements 136 that are appropriately spaced with regard to the spacing of the rows of crops being grown on the land parcel. Depending conduit sections 138 may be supported with respect to the T connector elements 136 by means of quick disconnect coupling devices 140, thereby allowing the fumigation elements 142 depending therefrom to be simply and quickly attached to or removed from a connected relation with the fumigation mainline conduit. An adjustable valve element 144 is provided for adjusting the desired flow rate of liquid spray being omitted from the fumigation spray nozzles 146. By employing the quick disconnect elements 140, other liquid distribution apparatus such as may be employed for distributing liquid fertilizer at the roots of the plants may be simply and efficiently interconnected with the mainline conduit 130 and employed in order to provide a desirable function. It should also be borne in mind that, for the purpose of distributing liquid fertilizer material, the irrigation water distribution system of the apparatus may be employed quite effectively. At the engine and pump assembly, a quantity of liquid fertilizer material may be suitably mixed with irrigation water and distributed along with the irrigation water over the land area. The fumigation mainline conduit 130 effectively provides a suitable alternative to application of liquid fertilizer material to the crops growing on the land area and provides for distribution of such fertilizer materials only in the vicinity of the plant roots in the event such is desired.

Referring now particularly to Figure 9, the fumigation mainline conduit 130 is shown to define a quick disconnect coupling structure 150 at the initial extremity thereof. A vehicle 152 having a supply tank 154 capable of containing fumigant materials, liquid fertilizer or other liquid chemical material is adapted to travel along a roadway "R" that is located in substantially parallel relation with the water supply canal 108. The vehicle 152 is provided with an engine 156 that is adapted to drive a pump 158 having its suction interconnected with the liquid tank 154 and a discharge conduit 160 adapted for connection with the fumigation mainline conduit 130. The flexible hose type conduit 160 forming the discharge conduit of the pump is provided with a quick disconnect coupling 162 capable of making connection with coupling element 150. As the crop servicing mechanism 10 traverses along the land area L and with the truck or other vehicle 152 travelling along the roadway R at the same speed as travelled by the mechanism 10, any suitable liquid material such as fumigant, liquid fertilizer or other agricultural chemicals may be effectively distributed over the land area, applied directly to the soil or crops etc. depending upon the particular operation desired. In certain cases, it may be appropriate to simultaneously distribute liquid material from the fumigation mainline conduit 130 and the irrigation water supply conduit 18.

In view of the foregoing, it is readily apparent that the present invention is one well adapted to attain all of the objects and advantages hereinabove set forth, together with other advantages which will become obvious and inherent from the description of the apparatus itself. It will be understood that certain combinations and subcombinations are of utility and may be employed without reference to other features and subcombinations. This is contemplated by and is within the scope of the present invention.

As many possible embodiments may be made of this invention without departing from the spirit or scope thereof, it is to be understood that all matters hereinabove set forth or shown in the accompanying
drawings are to be interpreted as illustrative and
not in any limiting sense.

WHAT IS CLAIMED IS:

1. In a lateral move irrigation system for use in irrigating row crops, said system including an elongated conduit assembly, a plurality of wheeled towers movable along spaced generally parallel non-circular field rows so as to transport said conduit assembly in an elevated position over the field with the longitudinal extent of said conduit assembly generally perpendicular to the crop rows, means for driving each of said wheeled towers in such a way as to maintain the general perpendicular relationship of said conduit assembly with the crop rows, means for pumping a supply of water under pressure to said conduit assembly and means for distributing the water under pressure in said conduit assembly into operative relation with the row crops in the field during the transportation of the conduit assembly thereover, the improvement in combination therewith which comprises elongated row crop produce conveying means extending generally longitudinally in coextensive relation with said conduit assembly so as to be transported with said conduit assembly in an elevated position over the field during the movement of the wheeled towers.

2. The improvement as defined in claim 1 including a row crop produce elevator operatively associated with said elongated conveyor means for elevating harvested row crops from a lower loading position in each field row between each pair of adjacent crop rows over which said conveyor means is transported into an upper discharge position onto said conveyor means.

3.  The improvement as defined in claim 2 wherein each of said elevators is suspended from said conveyor means so as to be adjustably movable horizontally in a direction transverse to the associated field row.

4.  The improvement as defined in claim 2 wherein each of said elevators includes means for effecting a manual movement thereof between said loading and discharge position.

5.  The improvement as defined in claim 1, 2, 3 or 4 wherein said conveyor means comprises an endless belt assembly extending between each pair of adjacent wheeled towers, the ends of each adjacent pair of endless belt assemblies being disposed in produce transferring relation with respect to one another.

6.  The improvement as defined in claim 1, 2, 3 or 4 wherein said means for distributing water under pressure from said conduit assembly into operative relation with the crop rows in the field over which the conduit assembly is transported comprises a branch conduit extending from said conduit assembly downwardly to a position adjacent each field row between each pair of adjacent crop rows over which said conduit assembly is transported and means on the lower end of each branch conduit for discharging water therefrom onto the adjacent ground at a relatively low velocity such that substantial quantities of water are delivered to the ground without imparting thereto a velocity sufficient to substantially disturb the same.

7. The improvement as defined in claim 6 wherein said conveyor means comprises an endless belt assembly extending between each pair of adjacent wheeled towers, the ends of each adjacent pair of endless belt assemblies being disposed in produce transferring relation with respect to one another.

8. The improvement as defined in claim 1, 2, 3 or 4 including an elongated liquid chemical supply line means extending substantially parallel and coextensive with said conduit assembly for transportation therewith in an elevated position over the field during the movement of said wheeled towers, means for pumping a supply of liquid chemical under pressure to said liquid chemical supply line means and means for distributing liquid chemical under pressure in said supply line means to the row crops during the transport of said liquid chemical supply line means over the field by said wheeled towers.

9. The improvement as defined in claim 8 wherein said liquid chemical distributing means comprises a liquid chemical branch line extending downwardly from said liquid chemical supply line means to a position adjacent each field row between each pair of adjacent crop rows over which said supply line means is transported and liquid chemical nozzle means in each liquid chemical branch line for directing liquid chemical under pressure in said branch line in generally opposed relation to the sides of the crops in the associated pair of crop rows.

10.  The improvement as defined in claim 8 wherein said conveyor means comprises an endless belt assembly extending between each pair of adjacent wheeled towers, the ends of each adjacent pair of endless belt assemblies being disposed in produce transferring relation with respect to one another.

11.  The improvement as defined in claim 1, 2, 3 or 4 wherein said means for distributing water under pressure from said conduit assembly into operative relation with the crop rows in the field over which the conduit assembly is transported comprises a branch conduit extending from said conduit assembly downwardly to a position adjacent each field row beneath each pair of adjacent crop rows over which said conduit assembly is transported and means on the lower end of each branch conduit for discharging water therefrom onto the adjacent ground at a relatively low velocity such that substantial quantities of water are delivered to the ground without imparting thereto a velocity sufficient to substantially disturb the same, an elongated liquid chemical supply line means extending substantially parallel and coextensive with said conduit assembly for transportation therewith in an elevated position over the field during the movement of said wheeled towers, means for pumping a supply of liquid chemical under pressure to said liquid chemical supply line means and means for distributing liquid chemical under pressure in said supply line means to the row crops during the transport of said liquid chemical supply line means over the field by said wheeled towers.

12. The improvement as defined in claim 11 wherein said liquid chemical distributing means comprises a liquid chemical branch line extending downwardly from said liquid chemical supply line means to a position adjacent each field row between each pair of adjacent crop rows over which said supply line means is transported and liquid chemical nozzle means in each liquid chemical branch line for directing liquid chemical under pressure in said branch line in generally opposed relation to the sides of the crops in the associated pair of crop rows.

13. The improvement as defined in claim 11 wherein said conveyor means comprises an endless belt assembly extending between each pair of adjacent wheeled towers, the ends of each adjacent pair of endless belt assemblies being disposed in produce transferring relation with respect to one another.

# FIG. 1

# FIG. 2

0040828

FIG. 3

FIG. 5

FIG. 7

FIG.6

FIG.4

0040828

FIG. 8

F I G. 9

0040828

European Patent Office

**EUROPEAN SEARCH REPORT**

Application number

EP 81 10 3925.4

| | **DOCUMENTS CONSIDERED TO·BE RELEVANT** | | CLASSIFICATION OF THE APPLICATION (Int. Cl.³) |
|---|---|---|---|
| Category | Citation of document with indication, where appropriate, of relevant passages | Relevant to claim | |
| | US – A – 4 184 639 (CH.S. MILLER)<br>* abstract; fig. 1 *<br>-- | 1 | A 01 G 25/09<br>A 01 D 45/00 |
| | FR – A – 1 390 798 (R. XENARD)<br>* entire document *<br>-- | 6,8,9,<br>11,12 | |
| | DE – G – 348 102 (K.L. LANNINGER)<br>* entire document *<br>-- | 6,11 | |
| | DE – A1 – 2 654 169 (H. SCHNEIDER)<br>* page 7, lines 5 to 18; fig. 1 *<br>-- | 6 | TECHNICAL FIELDS SEARCHED (Int. Cl.³) |
| A | US – A – 3 034 635 (R.W. STARR)<br>* column 3, lines 34 to 74; fig. 1 *<br>-- | 1 | A 01 C 5/08<br>A 01 C 23/00<br>A 01 D 45/00 |
| A | US – A – 4 168 597 (D.W. CAYTON)<br>* abstract; fig. 1 *<br>---- | 1 | A 01 G 25/09 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search | Date of completion of the search | Examiner | |
| Berlin | 29-07-1981 | SCHOFER | |

EPO Form 1503.1 06.78